# DEMANDE DE BREVET EUROPEEN

(11) **EP 4 389 474 A1**
(43) Date de publication de la demande: **26.06.2024**
(21) Numéro de dépôt: 23218725.2
(22) Date de dépôt: 20.12.2023
(51) Int. Cl.: B60G 21/055, F16C 11/06

(54) **DISPOSITIF DE FIXATION D'UNE EXTRÉMITÉ D'UNE BARRE ANTI-DÉVERS À UN SYSTÈME DE SUSPENSION D'UN VÉHICULE, ET VÉHICULE ASSOCIÉ**

(30) Priorité: 22.12.2022 FR 2214293
(71) Demandeur: Renault s.a.s, 92100 Boulogne Billancourt (FR)
(72) Inventeur: BOURDIER, Céline, 72000 LE MANS (FR); FROMENTIN, Pascal, 78280 GUYANCOURT (FR)

(57) **Abrégé**

Ce dispositif de fixation (5) d'une extrémité (3c) d'une barre anti-dévers (3) d'un véhicule (1) à un système de suspension (4) du véhicule comprend une biellette (6) destinée à être connectée au système de suspension (4) et un moyen de fixation (7) de la biellette (6) à la barre anti-dévers (3), la biellette (6) comportant une extrémité équipée d'une rotule (7a), le moyen de fixation (7) comprenant un organe de raccord (9) fixé à la rotule (7a) et un insert de fixation (8) configuré pour recevoir l'organe de raccord (9), l'insert de fixation (9) étant partiellement introduit dans l'extrémité (3c) de la barre anti-dévers (3).

## Description

### Domaine technique

L'invention concerne, de manière générale, tout système comprenant un pivot de rotule à solidariser, et notamment un tel système évoluant dans un environnement vibratoire et sujet à des sollicitations alternées importantes et répétées.

L'invention concerne plus spécialement une barre anti-dévers pour véhicule automobile, et se rapporte plus particulièrement à un dispositif de fixation des extrémités de la barre anti-dévers à un système de suspension du véhicule.

### Techniques antérieures

Depuis plusieurs dizaines d'années, les véhicules automobiles sont équipés d'au moins une barre anti-dévers, aussi appelée barre anti-roulis ou barre stabilisatrice, qui consiste en une pièce métallique, par exemple en acier, sensiblement en forme de U et de section circulaire, et qui permet de limiter l'inclinaison du véhicule dans les courbes ou dans les nids-de-poule. Un telle barre anti-dévers relie par chacune de ses extrémités l'un des deux systèmes de suspension d'un même train de roues du véhicule. Chaque extrémité de la barre anti-dévers est donc liée au système de suspension d'une des roues du même train de roues à l'aide d'un dispositif de fixation.

Traditionnellement, ce dispositif de fixation est formé par une liaison vissée. Plus précisément, afin de solidariser un système de suspension à une extrémité de la barre anti-dévers, une biellette est reliée par une première extrémité au système de suspension, et une extrémité opposée de cette biellette est solidarisée via une vis et un écrou à ladite extrémité de la barre anti-dévers. La vis et l'écrou sont ainsi des éléments indépendants de la barre anti-dévers.

Néanmoins, le procédé de fabrication est exigeant et s'avère difficile à mettre en oeuvre, notamment en ce qui concerne l'obtention d'une géométrie des extrémités de barre anti-dévers permettant de recevoir la vis et l'écrou de façon appropriée. En effet, l'extrémité de la barre anti-dévers doit être chauffée, forgée pour être écrasée, pliée puis trouée, afin de recevoir la vis et l'écrou indépendants de la barre anti-dévers.

La présente invention a donc pour but d'éviter les inconvénients précités et de proposer un dispositif de fixation d'une extrémité d'une barre anti-dévers d'un véhicule à un système de suspension du véhicule facile à fabriquer, peu coûteux et robuste.

L'invention a donc pour objet un dispositif de fixation d'une extrémité d'une barre anti-dévers d'un véhicule à un système de suspension du véhicule, comprenant une biellette destinée à être connectée au système de suspension et un moyen de fixation de la biellette à la barre anti-dévers, la biellette comportant une extrémité équipée d'une rotule, le moyen de fixation comprenant un organe de raccord fixé à la rotule et un insert de fixation configuré pour recevoir l'organe de raccord, l'insert de fixation étant partiellement introduit dans l'extrémité de la barre anti-dévers.

Avantageusement, l'organe de raccord comprend un embout fileté, l'insert de fixation comprenant une partie interne taraudée configurée pour coopérer avec et recevoir l'embout fileté.

Avantageusement, l'insert de fixation comporte un corps cylindrique s'étendant selon un axe et une tête d'appui formée sur un bout du corps cylindrique, la tête d'appui reposant contre l'extrémité de la barre anti-dévers et le corps cylindrique étant inséré dans l'extrémité de la barre anti-dévers.

De manière préférentielle, la partie interne s'étend axialement dans le corps cylindrique et débouche sur la tête d'appui.

De manière préférentielle, la tête d'appui est soudée par résistance électrique à l'extrémité de la barre anti-dévers.

Avantageusement, l'organe de raccord comprend un moyen de serrage activable à l'aide d'un outil de serrage, le moyen de serrage étant relié par un filet de matière à la rotule de la biellette et étant disposé axialement entre le filet de matière et l'embout fileté.

De manière préférentielle, l'organe de raccord comprend un soufflet de protection entourant le filet de matière pour la protection de la rotule.

Avantageusement, le moyen de serrage est une couronne hexagonale d'une dimension radiale supérieure au diamètre de l'embout fileté.

L'invention a également pour objet un véhicule comprenant un train de roue comportant une première et une deuxième roues, la première roue étant associé à un premier système de suspension et la deuxième roue étant associée à un deuxième système de suspension, les deux systèmes de suspension étant connectés entre eux par l'intermédiaire d'une barre anti-dévers du véhicule, la barre anti-dévers étant fixée aux systèmes de suspension en chacune de ses extrémités par un dispositif de fixation tel que défini ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig1] illustre un dispositif de fixation d'un système de suspension à la barre anti-dévers d'un véhicule selon l'invention ; et
[Fig2] illustre une vue en coupe longitudinale du dispositif de fixation de la figure 1.

### Exposé détaillé d'au moins un mode de réalisation

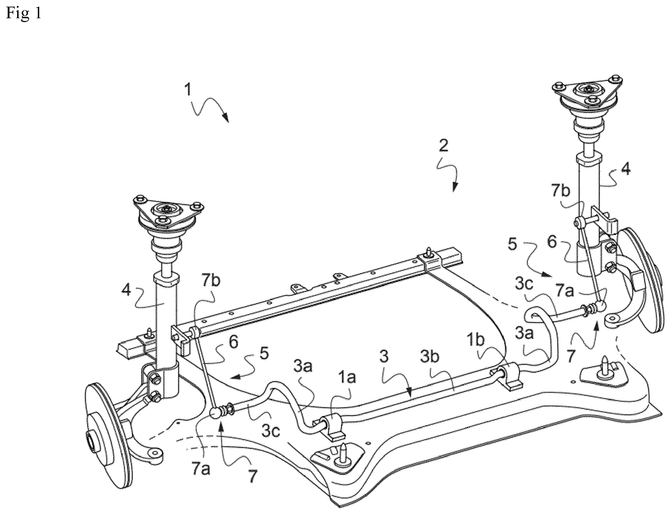

On a représenté sur la figure 1 une vue en perspective partielle d'un véhicule automobile 1 équipé d'un ensemble anti-dévers 2 selon l'invention.

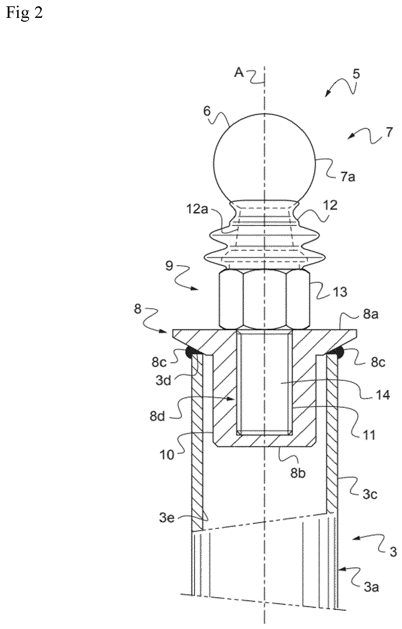

L'ensemble anti-dévers 2 comprend une barre anti-dévers 3, aussi appelée barre antiroulis ou barre de stabilisation. La barre anti-dévers 3 est de façon connue une pièce métallique, par exemple en acier, ayant une portion sensiblement en forme de U et de section circulaire. La barre anti-dévers 3 comprend ainsi deux bras latéraux identiques 3a, et un tronçon central 3b reliant les deux bras latéraux 3a par l'une de leurs extrémités. Chacun des bras latéraux 3a comprend ainsi une extrémité liée au tronçon central 3b et une extrémité libre opposée creuse 3c prolongeant latéralement la barre anti-dévers. En référence à la figure 2, chacune des extrémités libres opposées 3c comporte une tranche d'extrémité 3d comprenant une entrée donnant accès à l'intérieur de l'extrémité libre 3c, cet intérieur étant formé par une paroi interne 3e.

La barre anti-dévers 3 est fixée au châssis du véhicule 1 par des paliers 1a et 1b enserrant partiellement le tronçon central 3b.

Le véhicule 1 comprend un système de suspension 4 associé à chacune des roues d'un même train de roues avant ou arrière du véhicule 1. Le véhicule 1 comprend donc un système de suspension 4 pour la roue gauche et un système de suspension 4 pour la roue droite.

Chaque système de suspension 4 est connecté à l'ensemble anti-dévers 2 par l'intermédiaire d'un dispositif de fixation 5. Plus précisément, les dispositifs de fixation 5 permettent chacun de connecter un système de suspension 4 à une extrémité 3c creuse d'un bras latéral 3a de la barre anti-dévers 3.

Par la suite, on ne décrira que l'un des dispositifs de fixation 5, par exemple le dispositif de fixation 5 de la roue gauche, l'ensemble de ce qui sera décrit étant symétrique et identique pour le côté droit. Un tel dispositif de fixation 5 est illustré en coupe longitudinale partielle sur la figure 2. L'extrémité libre 3c creuse gauche de la barre anti-dévers 3 est ainsi illustrée sur la figure 2 et s'étend selon un axe A longitudinal. La tranche d'extrémité 3d est ainsi orthogonale à l'axe A. De même, la paroi interne 3e de l'intérieur de l'extrémité libre 3c a une section circulaire orthogonale à l'axe A.

Le dispositif de fixation 5 comprend une biellette 6 et un moyen de fixation 7 de la biellette 6 à la barre anti-dévers 3. Plus précisément, le moyen de fixation 7 est un moyen de fixation de la biellette 6 à l'extrémité creuse 3c d'un bras latéral 3a de la barre anti-dévers 3.

La biellette 6 est une tige métallique comportant une première extrémité formée par une première rotule 7a et une deuxième extrémité opposée formée par une seconde rotule 7b. La première rotule 7a connecte la biellette 6 à la barre anti-dévers 3, et plus précisément à l'extrémité creuse 3c d'un bras latéral 3a de la barre anti-dévers 3, tandis que la seconde rotule 7b connecte la biellette 6 au système de suspension 4. Les rotules 7a et 7b permettent ainsi à la biellette 6 de s'orienter en fonction du mouvement relatif du système de suspension 4 par rapport à la barre anti-dévers 3.

Le moyen de fixation 7 comprend un insert de fixation 8 et un organe de raccord 9 de la biellette à l'insert de fixation illustrés en coupe longitudinale partielle sur la figure 2.

L'insert de fixation 8 comprend une tête d'appui 8a et un corps cylindrique 8b de section sensiblement circulaire et de diamètre constant inférieur au diamètre de la paroi interne 3e de l'intérieur de l'extrémité 3c de la barre anti-dévers 3. La tête d'appui 8a constitue l'une des extrémités du corps cylindrique 8b et forme une collerette de diamètre supérieur au diamètre respectivement du corps cylindrique 8b et de l'extrémité 3c de la barre anti-dévers 3. L'insert de fixation 8 a donc sensiblement une section longitudinale en forme de « T ».

L'insert de fixation 8 est ainsi introduit partiellement dans l'extrémité creuse 3c d'un bras latéral 3a de la barre anti-dévers 3. Plus précisément, l'introduction de l'insert de fixation 8 dans l'extrémité de la barre anti-dévers 3 se fait par l'insertion du corps cylindrique 8b dans la barre 3 par la tranche d'extrémité 3d. La tête d'appui 8a bloque l'introduction de l'insert 8 dans la barre 3, et s'appuie contre l'extrémité de la barre anti-dévers 3. En d'autres termes, la tête d'appui 8a est positionnée contre l'extrémité creuse 3c du bras latéral 3b de la barre anti-dévers 3 et dans son prolongement axial. Ainsi, l'insert de fixation 8 et l'extrémité 3c de la barre anti-dévers 3 s'étendent selon un même axe A portant le centre de leurs section circulaire respective.

Le diamètre du corps cylindrique 8b est suffisamment inférieur au diamètre interne de la barre anti-dévers 3 pour qu'aucun contact n'ait lieu entre le corps cylindrique 8b et la barre anti-dévers 3. Le corps cylindrique 8b comprend donc une surface externe 10 en regard de la paroi interne 3e de l'extrémité 3c de la barre anti-dévers 3. Cette surface externe 10 définit une partie externe 10 de l'insert de fixation 8.

La fixation de l'insert 8 à la barre anti-dévers 3 se fait par une soudure 8c par résistance électrique au niveau du contact entre la tête d'appui 8a de l'insert 8 et l'extrémité 3c de la barre anti-dévers 3, comme illustré sur la figure 2.

L'insert de fixation 8 est borgne. En d'autres termes, une cavité cylindrique 8d est pratiquée dans l'insert 8, cette cavité cylindrique 8d traversant l'insert 8 et débouchant au niveau de la tête d'appui 8a sur l'extérieur de l'insert 8. La cavité 8d est en revanche fermée sur son extrémité opposée à la tête d'appui 8a. La cavité 8d constitue donc un logement dont l'accès est constitué par la partie débouchante sur la tête d'appui 8a.

La cavité 8d est cylindrique et est délimitée par une paroi interne 11 de l'insert 8 de section circulaire orthogonale à l'axe A et dont le centre est porté par l'axe A.

L'insert de fixation 8 comprend donc une partie interne 11 définie par la paroi 11 de la cavité 8c, et une partie externe 10 définie par la surface externe 10 du corps cylindrique 8b.

L'organe de raccord 9 est fixé à la première rotule 7a de la biellette 6, et comprend un soufflet de protection 12, un moyen de serrage 13 et un embout fileté 14 alignés selon l'axe A, de sorte que l'organe de raccord 9 s'étend le même axe A que la cavité 8d, l'insert de fixation 8 et l'extrémité 3c creuse de la barre anti-dévers 3.

Le moyen de serrage 13 comprend par exemple une couronne hexagonale destinée à servir de prise à un outil de serrage tel qu'une clé à molette.

Le soufflet de protection 12 est disposé de façon connue autour d'un filet de matière 12a illustré en pointillés sur la figure 2 et reliant le moyen de serrage 13 à la rotule 7a. De cette façon, le soufflet 12 protège la rotule 7a d'un choc avec l'outil de serrage lors du serrage de l'organe de raccord 9. Le soufflet 12 protège également la rotule 7a des agressions extérieures telles que des liquides, de la poussière ou du sable.

L'embout fileté 14 s'étend depuis une surface du moyen de serrage 13 opposée à la rotule 7a et au soufflet de protection 12.

La dimension radiale du moyen de serrage 13 est supérieure au diamètre de l'embout fileté 14, de sorte que l'utilisation de l'outil de serrage soit facilitée et les risques de détérioration diminués.

La paroi interne formant la partie interne 11 de l'insert de fixation 8 est taraudée de sorte que l'embout fileté 14 est configuré pour s'introduire dans la partie interne de l'insert 8 et coopérer avec ledit taraudage. L'organe de raccord 9 est donc configuré pour coopérer avec la partie interne 11 pour solidariser l'insert 8 à la rotule 7a.

La longueur axiale de l'embout fileté 14 est sensiblement égale à la longueur axiale de la partie interne 11 de l'insert de fixation 8. Lorsque la rotule 7a et l'insert 8 sont solidarisés, le moyen de serrage 13 comprend donc une surface au contact de la tête 8a de l'insert 8.

Ainsi, la rotule 7a de la biellette 6 est fixée à l'ensemble anti-dévers 2, et plus particulièrement à la barre anti-dévers 3 par l'intermédiaire de l'organe de raccord 9 inséré partiellement dans l'insert de fixation 8 qui est solidarisé dans une extrémité libre et creuse d'un bras latéral 3a de la barre anti-dévers 3.

De cette façon, la fixation du système de suspension 4 à la barre anti-dévers 3 ne nécessite plus un forgeage contraignant et complexe de la barre anti-dévers 3. L'assemblage se fait à l'aide d'un dispositif de fixation simple à fabriquer et à assembler, épuré, peu coûteux et robuste.

## Revendications

1. Dispositif de fixation (5) d'une extrémité (3c) d'une barre anti-dévers (3) d'un véhicule (1) à un système de suspension (4) du véhicule, comprenant une biellette (6) destinée à être connectée au système de suspension (4) et un moyen de fixation (7) de la biellette (6) à la barre anti-dévers (3), la biellette (6) comportant une extrémité équipée d'une rotule (7a), le moyen de fixation (7) comprenant un organe de raccord (9) fixé à la rotule (7a) et un insert de fixation (8) configuré pour recevoir l'organe de raccord (9), l'insert de fixation (9) étant partiellement introduit dans l'extrémité (3c) de la barre anti-dévers (3).

2. Dispositif de fixation selon la revendication 1, dans lequel l'organe de raccord (9) comprend un embout fileté (14), l'insert de fixation (8) comprenant une partie interne (11) taraudée configurée pour coopérer avec et recevoir l'embout fileté (14).

3. Dispositif de fixation selon l'une des revendications 1 ou 2, dans lequel l'insert de fixation (8) comporte un corps cylindrique (8b) s'étendant selon un axe (A) et une tête d'appui (8a) formée sur un bout du corps cylindrique (8b), la tête d'appui (8a) reposant contre l'extrémité (3c) de la barre anti-dévers (3) et le corps cylindrique (8b) étant inséré dans l'extrémité (3c) de la barre anti-dévers (3).

4. Dispositif de fixation selon les revendications 2 et 3, dans lequel la partie interne (11) s'étend axialement dans le corps cylindrique et débouche sur la tête d'appui (8a).

5. Dispositif de fixation selon l'une des revendications 3 ou 4, dans lequel la tête d'appui (8a) est soudée par résistance électrique à l'extrémité (3c) de la barre anti-dévers (3).

6. Dispositif de fixation selon l'une quelconque des revendications 2 à 5, dans lequel l'organe de raccord (9) comprend un moyen de serrage (13) activable à l'aide d'un outil de serrage, le moyen de serrage (13) étant relié par un filet de matière (12a) à la rotule (7a) de la biellette (6) et étant disposé axialement entre le filet de matière (12a) et l'embout fileté (14).

7. Dispositif selon la revendication 6, dans lequel l'organe de raccord (9) comprend un soufflet de protection (12) entourant le filet de matière (12a) pour la protection de la rotule (7a).

8. Dispositif de fixation selon l'une des revendications 6 ou 7, dans lequel le moyen de serrage est une couronne hexagonale d'une dimension radiale supérieure au diamètre de l'embout fileté.

9. Véhicule (1) comprenant un train de roue comportant une première et une deuxième roues, la première roue étant associé à un premier système de suspension (4) et la deuxième roue étant associée à un deuxième système de suspension (4), les deux systèmes de suspension (4) étant connectés entre eux par l'intermédiaire d'une barre anti-dévers (3) du véhicule (1), la barre anti-dévers (3) étant fixée aux systèmes de suspension (4) en chacune de ses extrémités (3c) par un dispositif de fixation (4) selon l'une quelconque des revendications 1 à 8.
